# EUROPEAN PATENT APPLICATION

(11) **EP 4 834 834 A1**
(43) Date of publication of application: **04.11.2026**
(21) Application number: 23962683.1
(22) Date of filing: 28.12.2023
(51) Int. Cl.: C01B 32/205, C01B 32/21

(54) **GRAPHITE NEGATIVE ELECTRODE MATERIAL AND PREPARATION METHOD THEREFOR, AND LITHIUM-ION BATTERY**

(71) Applicant: Shanghai Shanshan New Material Co., Ltd, Shanghai 201306 (CN)
(72) Inventor: JIANG, Shouxin, Shanghai 201306 (CN); WU, Xianbin, Shanghai 201306 (CN); LI, Fuying, Shanghai 201306 (CN); LUO, Chao, Shanghai 201306 (CN)
(74) Representative: karo IP
(86) International application number: PCT/CN2023/142801
(87) International publication number: WO 2025/138002

(57) **Abstract**

**The present** application provides a graphite negative electrode material and a preparation method therefor, and a lithium-ion battery. The graphite negative electrode material comprises a first graphite material and a second graphite core, wherein the first graphite material comprises a first graphite core and a carbon coating layer coated on the surface of the single-particle first graphite core, the second graphite core is formed by carrying out graphitization treatment on a secondary particle, the first graphite core is obtained by carrying out graphitization treatment on first powder, and the first powder is formed by performing heat treatment and crushing and shaping treatment on a raw material, wherein 1≤D₁50×(0.71+0.39×D₁50×(1+0.01T))+M_{reversible gram capacity}/372≤100, in which T is the temperature of the heat treatment, D₁50 is the _{first} median particle diameter of the first powder, and M_{reversible gram capacity} is the reversible gram capacity of the formed graphite negative electrode material. The graphite negative electrode material has better coating uniformity and charge-discharge capability.

## Description

### TECHNICAL FIELD

This application relates to the field of lithium-ion batteries, and in particular to a graphite negative electrode material for a lithium-ion battery and a preparation method thereof, and a lithium-ion battery.

### BACKGROUND

In today's society, the new energy industry is in full swing along with the development of lithium-ion batteries, while the demand for battery applications is also constantly changing, and the demand for power batteries is increasingly strong. High volumetric energy density, good fast-charging performance, low temperature rise and electrode sheet expansion, and excellent high-temperature performance; these are all important indicators for measuring battery performance.

Artificial graphite negative electrode materials are formed by subjecting raw materials such as needle coke, petroleum coke, and pitch coke to processes such as crushing and granulation to obtain materials with a certain particle size distribution, and then subjecting them to high-temperature graphitization treatment to form a graphite layered structure.

Although artificial graphite negative electrode materials have been developed for decades, the industry still has a high demand for improving the charge-discharge performance of negative electrode materials, for example, the demand for fast charging of cells, the demand for reducing expansion of cells, and the demand for improving the target capacity of negative electrode materials.

Therefore, there is a need to provide a graphite negative electrode material and a preparation method thereof with better charge-discharge performance.

### SUMMARY

This application provides a graphite negative electrode material and a preparation process therefor, and a lithium-ion battery, so as to have better charge-discharge performance.

One aspect of the embodiments of this application provides a preparation method of a graphite negative electrode material, comprising: selecting a raw material, performing heat treatment and crushing and shaping treatment on the raw material to form single-particle first powder having a first median particle diameter, wherein 1≤D₁50×(0.71+0.39×D₁50×(1+0.01T))+M_{reversible gram capacity}/372≤100, where T is the temperature of the heat treatment, D₁50 is the first median particle diameter, and M_{reversible gram} capacity is the reversible gram capacity of the formed graphite negative electrode material; performing secondary treatment on the first powder, such that the single-particle first powder undergoes bonding between single particles to become a secondary particle; performing graphitization treatment on the first powder to form a single-particle first graphite core, and performing graphitization treatment on the secondary particle to form a second graphite core; coating a carbon coating layer on the surface of the single-particle first graphite core to form a first graphite material; and uniformly mixing the first graphite material and the second graphite core in proportion to form the graphite negative electrode material.

In some embodiments, the temperature of the heat treatment is 0~1400°C, the reversible gram capacity of the graphite negative electrode material is 320~365 mAh/g, and the first median particle diameter is 5~20 µm.

In some embodiments, the raw material is selected from needle coke having a volatile matter of 5~7%, or petroleum coke having a volatile matter of 8~11% and an S content of 1.0~3.0%.

In some embodiments, the range of the particle size distribution K value of the first powder is 0.8~1.5, K=(Dv90_{first powder}-Dv10_{first powder})/Dv50_{first powder}, wherein Dv50_{first powder} is the particle size corresponding to when the volume distribution percentage of the first powder reaches 50%, Dv90_{first powder} is the particle size corresponding to when the volume distribution percentage of the first powder reaches 90%, and Dv10_{first powder} is the particle size corresponding to when the volume distribution percentage of the first powder reaches 10%.

In some embodiments, the powder OI value G_{OI} of the graphite negative electrode material and the granulation degree γ of the first powder undergoing bonding between single particles to become secondary particles satisfy the relationship: 1≤100/(γ+3.3×G_{OI})≤25, wherein γ=(D₂50-D₁50)/D₁50×100%, and D₂50 is the second median particle diameter of the secondary particle.

In some embodiments, the powder OI value of the graphite negative electrode material is 1~20, and the granulation degree is 10%~200%.

In some embodiments, coating the carbon coating layer on the surface of the single-particle first graphite core to form the first graphite material comprises: performing a coating step, coating a carbon coating agent on the surface of the single-particle first graphite core; and performing a carbonization step, converting the carbon coating agent into the carbon coating layer.

In some embodiments, the carbon coating agent is petroleum asphalt having a softening point of 140~250°C, a resin having a molecular weight lower than 1000, or coal tar pitch having a softening point lower than 20°C; the coating layer is any one or more of hard carbon amorphous carbon or soft carbon amorphous carbon, with a thickness of 5~100nm.

In some embodiments, the carbonization step is performed under constant temperature conditions, the carbonization temperature is 800~1500°C, and the constant temperature time is greater than 2h and less than 12h.

In some embodiments, the Raman spectrum median I_{D}/I_{G} of the graphite negative electrode material, the coating amount of the carbon coating layer in the first graphite material, and the mixing ratio of the first graphite material and the second graphite core satisfy the relationship: 0.01≤α(D₁50×γ+1+T%)+0.1×β×T_{coating amount}≤5.0, wherein β is the mixing ratio of the first graphite material and the second graphite core, T_{coating amount} is the coating amount of the carbon coating layer in the first graphite material, T is the temperature of the heat treatment, γ is the granulation degree of the first powder undergoing bonding between single particles to become secondary particles, and α is the I_{D}/I_{G} Raman spectrum median of the graphite negative electrode material.

In some embodiments, in terms of mass ratio, the mixing ratio of the first graphite material and the second graphite core is 1:9~9:1.

Another aspect of this application further provides a graphite battery negative electrode material, comprising a first graphite material and a second graphite core, wherein the first graphite material comprises a first graphite core and a carbon coating layer coated on the surface of the single-particle first graphite core, the second graphite core is formed by performing graphitization treatment on a secondary particle, the first graphite core is obtained by performing graphitization treatment on first powder, and the first powder is formed by performing heat treatment and crushing and shaping treatment on a raw material, wherein 1≤D₁50×(0.71+0.39×D₁50×(1+0.01T))+M_{reversible gram capacity}/372≤100, where T is the temperature of the heat treatment, D₁50 is the first median particle diameter of the first powder, and M_{reversible gram capacity} is the reversible gram capacity of the formed graphite negative electrode material.

In some embodiments, the temperature of the heat treatment is 0~1400°C, the reversible gram capacity of the graphite negative electrode material is 320~365 mAh/g, and the first median particle diameter is 5~20 µm.

In some embodiments, the raw material is needle coke having a volatile matter of 5~7%, or petroleum coke having a volatile matter of 8~11% and an S content of 1.0~3.0%.

In some embodiments, the range of the particle size distribution K value of the first powder is 0.8~1.5, K=(Dv90_{first powder}-Dv10_{first powder})/Dv50_{first powder}, wherein Dv50_{first powder} is the particle size corresponding to when the volume distribution percentage of the first powder reaches 50%, Dv90_{first powder} is the particle size corresponding to when the volume distribution percentage of the first powder reaches 90%, and Dv10_{first powder} is the particle size corresponding to when the volume distribution percentage of the first powder reaches 10%.

In some embodiments, the powder OI value G_{OI} of the graphite negative electrode material and the granulation degree γ of the first powder undergoing bonding between single particles to become secondary particles satisfy the relationship: 1≤100/(γ+3.3×G_{OI})≤25, wherein γ=(D₂50-D₁50)/D₁50×100%, and D₂50 is the second median particle diameter of the secondary particle.

In some embodiments, the powder OI value of the graphite negative electrode material is 1~20, and the granulation degree is 10%~200%.

In some embodiments , the Raman spectrum median I_{D}/I_{G} of the graphite negative electrode material, the coating amount of the carbon coating layer in the first graphite material, and the mixing ratio of the first graphite material and the second graphite core satisfy the relationship: 0.01≤α(D₁50×γ+1+T%)+0.1×β×T_{coating amount}≤5.0, wherein β is the mixing ratio of the first graphite material and the second graphite core, T_{coating amount} is the coating amount of the carbon coating layer in the first graphite material, T is the temperature of the heat treatment, γ is the granulation degree of the first powder undergoing bonding between single particles to become secondary particles, and α is the I_{D}/I_{G} Raman spectrum median of the graphite negative electrode material.

In some embodiments, the mixing ratio of the first graphite material and the second graphite core is 3:7~7:3.

The embodiments of this application further provide a lithium-ion battery, comprising a negative electrode, the negative electrode being made from any one of the negative electrode materials according to the embodiments of this application.

Compared with the prior art, the preparation method of the graphite negative electrode material according to the embodiments of this application makes the formed first powder have higher sphericity through the crushing step, so that the single-particle first graphite core can achieve a more uniform and complete coating effect during the coating step; the first graphite material after forming the carbon coating layer has more lithium-ion diffusion channels, and at the same time, the disordered carbon layer of the carbon coating layer enables the graphite negative electrode material to have a lower surface resistance, and the structure ensures the fast-charging capability of the graphite negative electrode material; the mixed second graphite core is a secondary particle, which can further increase the orientation degree of the material, ensure the pores of the graphite negative electrode material in the porous structure of the electrode sheet, and increase the wettability of the electrolyte therein, thereby further improving the fast-charging performance of the graphite negative electrode material.

### BRIEF DESCRIPTION OF DRAWINGS

The following drawings describe in detail the exemplary embodiments disclosed in this application. The same reference numerals in the several views of the drawings indicate similar structures. Those skilled in the art will understand that these embodiments are nonlimiting and exemplary, and the drawings are only for the purpose of illustration and description, and are not intended to limit the scope of this application. Embodiments in other manners may also accomplish the inventive intent of this application. It should be understood that the drawings are not drawn to scale. Wherein:

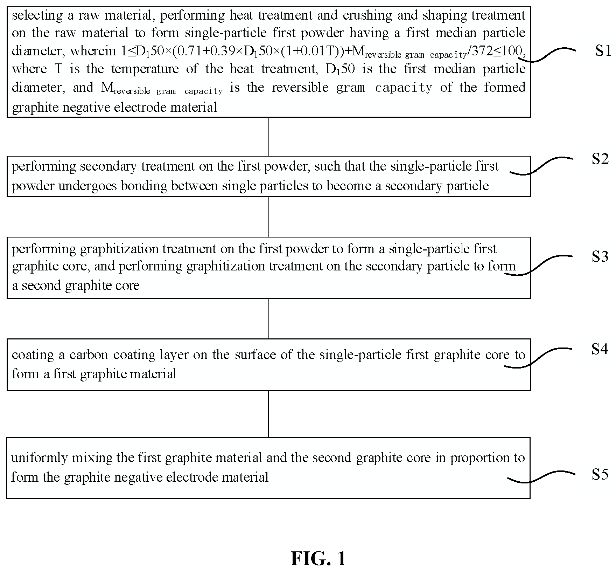

FIG. 1 is a schematic flow chart of the preparation method of the graphite negative electrode material according to an embodiment of this application.

### DETAILED DESCRIPTION OF EMBODIMENTS

The following description provides specific application scenarios and requirements of this application, and is intended to enable those skilled in the art to make and use the contents of this application. For those skilled in the art, various partial modifications to the disclosed embodiments will be apparent, and the general principles defined herein can be applied to other embodiments and applications without departing from the spirit and scope of this application. Therefore, this application is not limited to the shown embodiments, but is consistent with the broadest scope of the claims.

One aspect of the embodiments of this application provides a preparation method of a graphite negative electrode material, as shown in FIG. 1, comprising:
Step S1: selecting a raw material, performing heat treatment and crushing and shaping treatment on the raw material to form single-particle first powder having a first median particle diameter, wherein 1≤D₁50×(0.71+0.39×D₁50×(1+0.01T))+M_{reversible gram capacity}/372≤100, where T is the temperature of the heat treatment, D₁50 is the first median particle diameter, and M_{reversible gram capacity} is the reversible gram capacity of the formed graphite negative electrode material;
Step S2: performing secondary treatment on the first powder, such that the single-particle first powder undergoes bonding between single particles to become a secondary particle;
Step S3: performing graphitization treatment on the first powder to form a single-particle first graphite core, and performing graphitization treatment on the secondary particle to form a second graphite core;
Step S4: coating a carbon coating layer on the surface of the single-particle first graphite core to form a first graphite material;
Step S5: uniformly mixing the first graphite material and the second graphite core in proportion to form the graphite negative electrode material.

Firstly, Step S1 is performed: selecting a raw material, performing heat treatment and crushing and shaping treatment on the raw material to form single-particle first powder having a first median particle diameter.

The raw material according to the embodiments of this application is selected from coke materials, and different coke materials have different properties, which directly affect the morphology after crushing and key indicators such as the capacity, specific surface area, and tap density of the finally formed negative electrode material. The raw material includes needle coke, petroleum coke, or pitch, etc., and the volatile matter of the raw material is 0.01%~20%, preferably 0.01%~15%. In some embodiments of this application, in order to ensure the coating effect of the carbon coating layer in the formed negative electrode material, the raw material is selected from needle coke having a volatile matter of 5~7%, or petroleum coke having a volatile matter of 8~11% and an S content of 1.0~3.0%. Volatile matter refers to the mass percentage content of the substance, excluding water in the raw material, among the substances that escape as gas and liquid when a portion of the organic matter and minerals in the raw material decompose upon heating in isolation from air at a certain temperature.

The treatment of the raw material in this application may include heat treatment and crushing and shaping of the raw material. The heat treatment step is a heating modification step for the raw material. In some embodiments, the raw materials such as needle coke, petroleum coke, or pitch are subjected to heat treatment at a temperature of 0~1400°C, so that the structure and physicochemical properties of the raw material undergo certain changes, wherein the different heat treatment temperatures affect key indicators such as the reversible gram capacity, specific surface area, and tap density of the negative electrode material formed after crushing. In some embodiments of this application, the heat treatment temperature is preferably 500~1400°C.

The main purpose of the crushing and shaping step is to crush the heat-treated raw material and, through shaping treatment, form single-particle first powder having a first median particle diameter. The embodiments of this application may adopt equipment such as a mechanical mill, roller mill, or ball mill to perform the crushing and shaping step to form the first powder. The first median particle diameter D₁50 is used to mark the uniformity and particle size of the first powder formed after the crushing step.

In some embodiments of this application, the crushing and shaping step adopts physical crushing, and the measurement method for the first median particle diameter of the first powder is: using a laser diffraction particle size distribution measuring instrument, measuring the particle size distribution according to the laser diffraction method for particle size distribution.

Gram capacity refers to the ratio of the electrical capacity that can be released by the active material inside the battery to the mass of the active material. Reversible gram capacity refers to the ratio of the amount of charge that can be released by the active material during the charge-discharge process in a battery or supercapacitor to the electrode mass, that is, the reversibility of charge during the charge-discharge process. It is usually expressed in units of mAh/g or Ah/kg. Reversible gram capacity reflects the charge loss during the charge-discharge process of a battery or supercapacitor, and is one of the important indicators for evaluating the performance of a battery or supercapacitor.

In the embodiments of this application, the first median particle diameter of the first powder formed after the crushing step in Step S1 is denoted as D₁50, the heat treatment temperature is denoted as T, and the reversible gram capacity of the finally formed graphite negative electrode material is denoted as M_reversible gram capacity, then 1≤D₁50×(0.71+0.39×D₁50×(1+0.01T))+M_{reversible gram capacity}/372≤100. Through the relationship among the first median particle diameter D₁50 of the first powder, the heat treatment temperature T, and the reversible gram capacity M_{reversible gram capacity} of the finally formed graphite negative electrode material, the heat treatment temperature in the crushing step and the value or value range of the first median particle diameter can be accurately adjusted.

Optionally, 1≤D₁50×(0.71+0.39×D₁50×(1+0.01T))+M_{reversible} gram _{capacity}/372≤50.

In some embodiments of this application, the heat treatment temperature T is 0~1400°C, and the reversible gram capacity of the finally formed graphite negative electrode material is 320~365 mAh/g, then through 1≤D₁50×(0.71+0.39×D₁50×(1+0.01T))+M_{reversible gram capacity}/372≤100, the first median particle diameter of the first powder can be obtained as 5~20µm.

In some embodiments of this application, the heat treatment temperature T is 500~1400°C, and the reversible gram capacity of the finally formed graphite negative electrode material is 335~360mAh/g, then through 1≤D₁50×(0.71+0.39×D₁50×(1+0.01T))+M_{reversible gram capacity}/372≤50, the first median particle diameter of the first powder can be obtained as 7~15µm.

In some embodiments of this application, the range of the particle size distribution K value of the first powder is 0.8~1.5. Optionally, the range of the particle size distribution K value of the first powder is 1.0~1.3, wherein K=(Dv90_{first powder}-Dv10_{first powder})/Dv50_{first powder}, wherein Dv50_{first powder} is the particle size corresponding to when the volume distribution percentage of the first powder reaches 50%, Dv90_{first powder} is the particle size corresponding to when the volume distribution percentage of the first powder reaches 90%, and Dv10_{first powder} is the particle size corresponding to when the volume distribution percentage of the first powder reaches 10%.

In some embodiments of this application, the range of Dv50 is 4~18 µm, optionally, the range of Dv50 is 6~13 µm; the range of Dv10 is greater than or equal to 1.5 µm, optionally, the range of Dv10 is 2~6 µm; the range of Dv90 is less than or equal to 40 µm, optionally, the range of Dv90 is 10~30 µm. In some embodiments, Dv50 is 5 µm, Dv10 is 2.5 µm, Dv90 is 11.0 µm; or Dv50 is 8 µm, Dv10 is 3.6 µm, Dv90 is 16.0 µm; or Dv50 is 10 µm, Dv10 is 4.1 µm, Dv90 is 19.0 µm; or Dv50 is 12 µm, Dv10 is 5.6 µm, Dv90 is 22.0 µm, etc.

Step S2 is performed: performing secondary treatment on the first powder, such that the single-particle first powder undergoes bonding between single particles to become a secondary particle.

In the embodiments of this application, the secondary treatment comprises adding a binder to the first powder and, under temperature conditions of 500~700°C, causing the single-particle first powder to undergo bonding between single particles to become a secondary particle. The binder includes materials such as pitch or resin, the addition amount of the binder is less than or equal to 30% (mass percentage), optionally, the addition amount of the binder is less than or equal to 20% (mass percentage), for example 15%, 10%, 8%, 6%, 3%, etc., and the addition amount of the pitch or resin material may also be 0. The equipment for the secondary treatment includes a horizontal reactor, a vertical reactor, a drum furnace, or a rotary kiln, etc.

In the embodiments of this application, the second median particle diameter D₂50 of the secondary particle is greater than the first median particle diameter D₁50. The granulation degree γ of the first powder undergoing bonding between single particles to become a secondary particle is defined as the percentage of the difference between the second median particle diameter D₂50 and the first median particle diameter D₁50 divided by the first median particle diameter D₁50, that is:
$γ = \left({D}_{2}50-{D}_{1}50\right) / {D}_{1} 50 \times 100 % .$

In some embodiments of this application, the granulation degree γ is 10%~200%, optionally, the granulation degree γ is 40%~150%.

The first powder in the secondary treatment process may be a portion of the first powder prepared in Step S1, for example 10% to 90% of the first powder prepared in Step S1. Optionally, the first powder in the secondary treatment process is 30% to 70% of the first powder prepared in Step S1. Further, the first powder in the secondary treatment process is 40% to 50% of the first powder prepared in Step S1.

The powder orientation index of the graphite negative electrode material is abbreviated as the powder OI value. The powder OI value represents the expansion level of the negative electrode of the cell, and reflects the isotropy of the respective crystal phases of the grains at the electrode sheet level of the negative electrode of the cell. The smaller the powder OI value, the better the isotropy of the negative electrode of the cell at the electrode sheet level, that is, the lower the expansion level of the negative electrode of the cell.

In the embodiments of this application, the powder OI value of the graphite negative electrode material may be denoted as G_{OI}, then G_{OI}=S004/S110, wherein S004 is the peak area of the 004 characteristic diffraction peak in the X-ray diffraction pattern of the graphite negative electrode material, and S110 is the peak area of the 110 characteristic diffraction peak in the X-ray diffraction pattern of the graphite negative electrode material.

In some embodiments of this application, the powder OI value G_{OI} of the graphite negative electrode material and the granulation degree γ of the first powder undergoing bonding between single particles to become secondary particles satisfy the relationship: 1≤100/(γ+3.3×G_{OI})≤25. Optionally, 2≤100/(γ+3.3×G_{OI})≤15.

In some embodiments of this application, the powder OI value of the graphite negative electrode material is 1~15, then according to 1≤100/(γ+3.3×G_{OI})≤25, the granulation degree can be obtained as 10%~200%. In some embodiments of this application, the powder OI value of the graphite negative electrode material is 1~10, and according to 2≤100/(γ+3.3×G_{OI})≤15, the granulation degree can be obtained as 40%~150%.

Step S3 is performed: performing graphitization treatment on the first powder to form a single-particle first graphite core, and performing graphitization treatment on the secondary particle to form a second graphite core.

The graphitization treatment on the first powder as referred to in the embodiments of this application means subjecting the first powder to pyrolysis at a high temperature, so that the first powder forms a graphite structure with high crystallinity, and the graphite structure is the single-particle first graphite core. During the graphitization treatment, the lattice structure of the graphite material changes: the intermolecular spacing decreases, and the lattice structure becomes more ordered. The structural change enables the first graphite core to have better electrical conductivity and cycle stability. The first graphite core formed after graphitization treatment mainly comprises carbon elements, and may also comprise trace amounts of O elements. In the embodiments of this application, the equipment for performing the graphitization treatment includes an Acheson furnace, a box furnace, an internal series furnace, or a continuous graphitization furnace, etc. The graphitization temperature is higher than 2700°C, for example, the graphitization temperature is 2800~3200°C. Optionally, the graphitization temperature is 2900~3100°C.

The embodiments of this application further include performing graphitization treatment on the secondary particle to form a second graphite core, wherein the process and equipment for performing graphitization treatment on the secondary particle are the same as the process and equipment for performing graphitization treatment on the first powder, and the process for performing graphitization treatment on the secondary particle and the process for performing graphitization treatment on the first powder may be performed simultaneously in different reaction chambers of the same equipment, or may be performed sequentially in the same or different reaction chambers of the same equipment.

Step S4: coating a carbon coating layer on the surface of the single-particle first graphite core to form a first graphite material.

In the embodiments of this application, coating the carbon coating layer on the surface of the single-particle first graphite core comprises: performing a coating step, coating a carbon coating agent on the surface of the single-particle first graphite core; and performing a carbonization step, converting the carbon coating agent into the carbon coating layer.

The coating step as referred to in the embodiments of this application includes solid-phase coating treatment and liquid-phase coating treatment. The solid-phase coating treatment includes coating a solid-phase coating agent on the surface of the first graphite core, and the solid-phase coating agent is, for example, pitch, resin material, or a mixture of pitch and resin material. The liquid-phase coating treatment includes: first heating and melting a solid-phase coating agent in a horizontal reactor or a vertical reactor to form a liquid-phase coating agent, and then coating the liquid-phase coating agent on the surface of the first graphite core, and the solid-phase coating agent is, for example, pitch, resin material, or a mixture of pitch and resin material. The liquid-phase coating treatment may also use a low-coking-value solvent to prepare a liquid coating agent at room temperature, and use a fusion machine to coat it on the surface of the first graphite core.

The coating step is the core process for achieving the fast-charging capability of the graphite negative electrode material in this embodiment. In order to ensure the coating effect, i.e., the coating dominant characteristic value is sufficiently high, in some embodiments of this application, the carbon coating agent is selected from petroleum asphalt having a softening point of 140~250°C, a resin having a molecular weight lower than 1000, or coal tar pitch having a softening point lower than 20°C, and the addition amount of the carbon coating agent is 1~10% (mass percentage), for example 3~7% or 4~6%. The coating equipment used in the embodiments of this application may be selected from a fusion machine, a kneader, a vertical mixer, a ribbon mixer, a horizontal reactor, a vertical reactor, etc., more preferably a vertical mixer, a horizontal reactor, or a fusion machine, etc.

Performing the carbonization step converts the carbon coating agent into the carbon coating layer. After the carbonization step, the carbon coating agent is fixed on the surface of the single-particle first graphite core, while avoiding secondary adhesion caused by carbonization of the first graphite core particles. In the embodiments of this application, the degree of order of the first graphite core is higher than that of the carbon coating layer, and therefore the carbon coating layer can improve the fast-charging performance of the negative electrode material. For example, when the carbon coating layer is amorphous carbon, the amorphous carbon can improve the lithium-ion intercalation speed at the surface of the negative electrode, and can improve the pulse charging performance of the negative electrode material. Therefore, by limiting the coating amount of the carbon coating layer, the pulse charging demand of the cell made from the graphite negative electrode material can be satisfied. In some embodiments of this application, the coating layer is any one or more of hard carbon amorphous carbon or soft carbon amorphous carbon, with a thickness of 5~100nm. The coating amount of the carbon coating layer is less than or equal to 5.0%, for example 2%, 3%, or 4%, etc.

The carbonization treatment step according to the embodiments of this application may use carbonization equipment such as a rotary kiln, a roller kiln, or a tunnel kiln, and the carbonization step is performed under constant temperature conditions, for example, at a temperature of 800~1500°C, with a constant temperature time of greater than 2h and less than 12h, thereby improving the electrochemical performance of the carbon coating layer. The preferred carbonization equipment in the embodiments of this application is a roller kiln. The reaction temperature of the carbonization step is preferably 1000~1200°C, and the reaction time is preferably greater than 3h and less than 8h.

Step S5: uniformly mixing the first graphite material and the second graphite core in proportion to form the graphite negative electrode material. Wherein, in terms of mass ratio, the mixing ratio of the first graphite material and the second graphite core is, for example, 3:7~7:3. Optionally, the mixing ratio is 4:6, 5:5, or 6:4.

The Raman spectrum median I_{D}/I_{G} of the graphite negative electrode material, the coating amount of the carbon coating layer in the first graphite material, and the mixing ratio β of the first graphite material and the second graphite core satisfy the relationship: 0.01≤α×(D₁50×γ+1+T%)+0.1×β×T_{coating amount}≤5.0, wherein T_{coating amount} is the coating amount of the carbon coating layer in the first graphite material, T is the heat treatment temperature in Step S1, γ is the granulation degree of the first powder bonding into secondary particles in Step S2, that is, the percentage of the difference between the second median particle diameter D₂50 and the first median particle diameter D₁50 divided by the first median particle diameter D₁50, and α is the I_{D}/I_{G} Raman spectrum median of the graphite negative electrode material.

The Raman spectrum test results reflect the degree of disorder on the surface of the negative electrode material. In the graphite negative electrode material, the higher the proportion of the coating amount of the carbon coating layer in the first graphite material, the higher the I_{D}/I_{G} Raman spectrum median; and the higher the mixing ratio of the first graphite material in the graphite negative electrode material, the higher the degree of disorder of the graphite negative electrode material. The higher degree of disorder on the surface of the graphite negative electrode material can improve the lithium-ion intercalation speed at the surface of the negative electrode, and can improve the charging performance of the negative electrode material.

In order to better realize industrialization and batch production, the method according to the embodiments of this application may further include a finished product processing step, that is, completing the finished product stage processing through sieving and demagnetization treatment, to meet the requirements for shipment.

The preparation method of the graphite negative electrode material according to the embodiments of this application makes the formed first powder have higher sphericity through the crushing step, so that the single-particle first graphite core can achieve a more uniform and complete coating effect during the coating step; the first graphite material after forming the carbon coating layer has more lithium-ion diffusion channels, and at the same time, the disordered carbon layer of the carbon coating layer enables the graphite negative electrode material to have a lower surface resistance, and the structure ensures the fast-charging capability of the graphite negative electrode material. The mixed second graphite core is a secondary particle, which can further increase the orientation degree of the material, ensure the pores of the graphite negative electrode material in the porous structure of the electrode sheet, and increase the wettability of the electrolyte therein, thereby further improving the fast-charging performance of the graphite negative electrode material.

Another aspect of this application further provides a graphite battery negative electrode material, comprising a first graphite material and the second graphite core, wherein the first graphite material comprises a first graphite core and a carbon coating layer coated on the surface of the single-particle first graphite core, the second graphite core is formed by performing graphitization treatment on a secondary particle, the first graphite core is obtained by performing graphitization treatment on first powder, and the first powder is formed by performing heat treatment and crushing and shaping treatment on a raw material, wherein 1≤D₁50×(0.71+0.39×D₁50×(1+0.01T))+M_{reversible gram capacity}/372≤100, where T is the temperature of the heat treatment, D₁50 is the first median particle diameter of the first powder, and M_{reversible gram capacity} is the reversible gram capacity of the formed graphite negative electrode material.

In some embodiments, the temperature of the heat treatment is 0~1400°C, the reversible gram capacity of the graphite negative electrode material is 320~365 mAh/g, and the first median particle diameter is 5~20 µm.

In some embodiments, the raw material is selected from needle coke having a volatile matter of 5~7%, or petroleum coke having a volatile matter of 8~11% and an S content of 1.0~3.0%.

In some embodiments, the range of the particle size distribution K value of the first powder is 0.8~1.5, K=(Dv90_{first powder}-Dv10_{first powder})/Dv50_{first powder}, wherein Dv50_{first powder} is the particle size corresponding to when the volume distribution percentage of the first powder reaches 50%, Dv90_{first powder} is the particle size corresponding to when the volume distribution percentage of the first powder reaches 90%, and Dv10_{first powder} is the particle size corresponding to when the volume distribution percentage of the first powder reaches 10%.

In some embodiments, the powder OI value G_{OI} of the graphite negative electrode material and the granulation degree γ of the first powder undergoing bonding between single particles to become secondary particles satisfy the relationship: 1≤100/(γ+3.3×G_{OI})≤25, wherein γ=(D₂50-D₁50)/D₁50×100%, and D₂50 is the second median particle diameter of the secondary particle.

In some embodiments, the powder OI value of the graphite negative electrode material is 1~20, and the granulation degree is 10%~200%.

In some embodiments, the Raman spectrum median I_{D}/I_{G} of the graphite negative electrode material, the coating amount of the carbon coating layer in the first graphite material, and the mixing ratio of the first graphite material and the second graphite core satisfy the relationship: 0.01≤α(D₁50×γ+1+T%)+0.1×β×T_{coating amount}≤5.0, wherein β is the mixing ratio of the first graphite material and the second graphite core, the mixing ratio being the ratio of mixing mass, T_{coating amount} is the coating amount of the carbon coating layer in the first graphite material, T is the temperature of the heat treatment, γ is the granulation degree of the first powder undergoing bonding between single particles to become secondary particles, and α is the I_{D}/I_{G} Raman spectrum median of the graphite negative electrode material.

In some embodiments of this application, the mixing ratio of the first graphite material and the second graphite core is 3:7~7:3.

This application further provides a lithium-ion battery negative electrode material, prepared by any one of the preparation methods of the graphite negative electrode material described above.

The embodiments of this application are further described below with reference to Examples 1~9 and Comparative Examples 1~4.

### Examples 1~9:

### Example 1

Step (1): Needle coke having a volatile matter of 6.0% was selected as the raw material, and heat treatment and crushing and shaping treatment were performed on the raw material to form single-particle first powder having a first median particle diameter of 9µm, the heat treatment temperature was 1200°C, and the K value of the first powder was 1.3.

Step (2): 50% of the first powder prepared in Step (1) was taken out, and secondary treatment was performed on the taken first powder. The additive for secondary treatment was 6% petroleum asphalt, the secondary treatment equipment was a rotary kiln, the secondary treatment temperature was 600°C, and the single-particle first powder underwent bonding between single particles to become a secondary particle having a second median particle diameter of 13.5 µm.

Step (3): The remaining 50% of the first powder prepared in Step (1) was taken out, and graphitization treatment was performed to form a single-particle first graphite core, and the secondary particle obtained in Step (2) was subjected to graphitization treatment to form a second graphite core; the graphitization temperature was 3000°C.

Step (4): Liquid-phase asphalt with 2% residual carbon was coated on the surface of the single-particle first graphite core formed in Step (3), the coating equipment was a horizontal reactor, and then carbonization treatment was performed on the first graphite core coated with asphalt, the carbonization temperature was 1150°C, the carbonization time was 5 h, so that the coated asphalt was converted into an amorphous carbon coating layer, forming a first graphite material.

Step (5): The first graphite material obtained in Step (4) and the second graphite core obtained in Step (3) were mixed at a mass percentage ratio of 6:4, and after uniform mixing, the graphite negative electrode material was formed.

### Example 2

The heat treatment temperature in Step (1) of Example 1 was changed to 900°C, forming single-particle first powder having a first median particle diameter of 10.5 µm, and at the same time the mass ratio of the first graphite material and the second graphite core for mixing in Step (5) was changed to 7:3, and other conditions were unchanged, to obtain the sample of Example 2.

### Example 3

The needle coke raw material having 6% volatile matter in Step (1) of Example 1 was replaced with a petroleum coke raw material having 10% volatile matter, no heat treatment was performed, and single-particle first powder having a first median particle diameter of 8.5 µm was formed by crushing, and at the same time the mixing ratio of the first graphite material and the second graphite core in Step (5) was changed to 5:5, and other conditions were unchanged, to obtain the sample of Example 3.

### Example 4

Step (1): Petroleum coke raw material having a volatile matter of 10% and needle coke raw material having a volatile matter of 6% were respectively selected, no heat treatment was performed, and the two raw materials were respectively subjected to crushing and shaping treatment to form single-particle first powder each having a first median particle diameter of 8.0 µm, and the K value of the first powder was 1.3.

Step (2): The first powder prepared from the petroleum coke raw material having a volatile matter of 10% in Step (1) was subjected to secondary treatment, the additive for secondary treatment was 6% petroleum asphalt, the secondary treatment equipment was a rotary kiln, the secondary treatment temperature was 600°C, and the single-particle first powder underwent bonding between single particles to become a secondary particle having a second median particle diameter of 13.5 µm.

Step (3): The first powder prepared from the needle coke raw material having 6% volatile matter in Step (1) was subjected to graphitization treatment, the graphitization treatment temperature was 3000°C, forming a single-particle first graphite core, and the secondary particle obtained in Step (2) was subjected to graphitization treatment, the graphitization treatment temperature was 3000°C, forming a second graphite core; in Step (5), the first graphite core and the second graphite core prepared in Step (3) were mixed at a mass ratio of 7:3, to obtain the sample of Example 4.

### Example 5

The step of heat-treating the needle coke raw material having 6% volatile matter in Step (1) of Example 1 was removed, the step of coating the amorphous carbon coating layer on the surface of the single-particle first graphite core in Step (4) of Example 4 was omitted, and the first graphite core and the second graphite core obtained in Step (3) were mixed in Step (5), and other conditions were the same as Example 4, to obtain the sample of Example 5.

### Example 6

The step of heat-treating the needle coke raw material having 6% volatile matter in Step (1) of Example 1 was removed, the step of coating the amorphous carbon coating layer on the surface of the single-particle first graphite core in Step (4) of Example 1 was omitted, and the first graphite core and the second graphite core obtained in Step (3) were mixed at a mass ratio of 4:6, and other conditions were the same as Example 1, to obtain the sample of Example 6.

### Example 7

The step of heat-treating the needle coke raw material having 6% volatile matter in Step (1) of Example 1 was removed, forming single-particle first powder having a first median particle diameter of 10.0 µm, and at the same time the step of coating the amorphous carbon coating layer on the surface of the single-particle first graphite core in Step (4) was changed to: forming a carbon coating layer on the surface of the second graphite core formed in Step (3), the process for forming the carbon coating layer was the same as in Example 1, and other conditions were also the same as in Example 1, to obtain the sample of Example 7.

### Example 8

The petroleum coke raw material in Step (1) of Example 2 was heat-treated at a temperature of 600°C, and in Step (4), the following was adopted: forming a carbon coating layer on the surface of the second graphite core formed in Step (3), the coating agent was phenolic resin with a mass percentage of 2%, and other process conditions were the same as in Example 1, to obtain the sample of Example 8.

### Example 9

The carbonization temperature in Step (4) of Example 1 was changed to 1500°C, and other conditions were unchanged, to obtain the sample of Example 9.

### Comparative Example 1

The raw material in Step (1) of Example 1 was crushed with a K value of 1.8, and other condition parameters were unchanged, to obtain the sample of Comparative Example 1.

### Comparative Example 2

Needle coke having a volatile matter of 6.0% was used as the raw material in Step (1) of Example 1, the raw material was directly subjected to crushing and shaping treatment to form single-particle first powder having a first median particle diameter of 8.0 µm, after single-particle coating in Step (4), carbonization was performed at a temperature of 700°C, and at the same time the first graphite material and the second graphite core were mixed at a mass ratio of 5:5 in Step (5), to obtain the sample of Comparative Example 2.

### Comparative Example 3

The step of heat-treating the needle coke raw material having 6% volatile matter in Step (1) of Example 1 was removed, and at the same time all the material in Step (2) was subjected to secondary treatment, and other conditions were unchanged, to obtain the sample of Comparative Example 3.

### Comparative Example 4

The step of heat-treating the needle coke raw material having 6% volatile matter in Step (1) of Example 1 was removed, and all the material in Step (2) of Example 1 was not subjected to secondary treatment, and other conditions were unchanged, to obtain the sample of Comparative Example 4.

The first graphite core materials and the formed graphite negative electrode materials in Examples 1~9 and Comparative Examples 1~4 were subjected to median particle diameter measurement, tap density testing, specific surface area testing, powder compaction density testing, and powder OI value testing, and the test results are calculated as shown in Table 1, wherein the method for measuring the particle size is: using a laser diffraction particle size distribution measuring instrument, measuring the particle size distribution according to the laser diffraction method for particle size distribution.

The tap density testing method: the test sample was placed in a measuring cylinder of a certain volume, the vibration frequency was 250 times/min, the vibration frequency was 3000 times, and after vibration was completed, the tap density was calculated based on the volume after vibration was completed. The specific surface area was tested by nitrogen physical adsorption, using a specific surface area tester, and the sample was tested to obtain the specific surface area value.

**Table 1: Test data of the first graphite core materials and the formed graphite negative electrode materials in Examples 1~9 and Comparative Examples 1~4**

| | **D₁50** | **β** | **γ** | **Median particle diameter of graphite negative electrode material** | **Tap density of graphite negative electrode material** | **Specific surface area of graphite negative electrode material** | **Powder compaction density of graphite negative electrode material** | **M_{reversible gram capacity}** | **Powder OI value of graphite negative electrode material** |
|---|---|---|---|---|---|---|---|---|---|
| Example 1 | 9.0 | 60% | 100% | 16.0 | 1.00 | 1.40 | 1.93 | 357.9 | 2.98 |
| Example 2 | 10.5 | 70% | 91% | 15.4 | 1.00 | 1.40 | 2.02 | 354.2 | 3.59 |
| Example 3 | 8.5 | 50% | 97% | 13.3 | 1.18 | 1.62 | 1.85 | 352.1 | 3.24 |
| Example 4 | 8.0 | 70% | 75% | 12.9 | 1.15 | 1.51 | 1.84 | 350.0 | 2.44 |
| Example 5 | 9.0 | 60% | 100% | 11.0 | 1.17 | 1.47 | 1.86 | 351.2 | 2.86 |
| Example 6 | 9.0 | 40% | 120% | 10.5 | 1.21 | 1.45 | 1.82 | 349.8 | 2.87 |
| Example 7 | 10.0 | 60% | 110% | 14.7 | 1.11 | 1.15 | 1.83 | 351.3 | 2.68 |
| Example 8 | 9.0 | 60% | 134% | 10.3 | 1.04 | 1.33 | 1.81 | 353.5 | 3.21 |
| Example 9 | 9.0 | 60% | 100% | 15.8 | 1.02 | 1.28 | 1.93 | 354.6 | 3.25 |
| Comp. Ex. 1 | 9.0 | 60% | 98% | 16.2 | 0.97 | 1.51 | 1.87 | 353.2 | 4.21 |
| Comp. Ex. 2 | 8.0 | 50% | 100% | 16.9 | 0.89 | 1.14 | 1.71 | 346.4 | 4.35 |
| Comp. Ex. 3 | 9.0 | 100% | 120% | 17.1 | 0.95 | 1.58 | 1.86 | 348.2 | 2.10 |
| Comp. Ex. 4 | 9.0 | 0% | 0% | 11.2 | 0.97 | 0.89 | 1.79 | 353.7 | 4.20 |

It can be seen from Table 1 that: with different median particle diameters of the first powder and different mixing ratios β of the first graphite material and the second graphite core, in Examples 1~9, the tap density of the formed graphite negative electrode material is higher than that of the comparative examples (greater than or equal to 1.0), which proves that the graphite negative electrode material formed by the method of the embodiments of this application has better processability, and at the same time, the powder OI value of the graphite negative electrode material formed by the method of the embodiments of this application is lower, and the lower powder OI value enables the cell prepared using the graphite negative electrode material to have smaller expansion, improving the cycle performance of the cell during charge-discharge cycling. The graphite negative electrode materials in Examples 1~9 mix the first graphite material and the second graphite core in different proportions, and compared with the cases in Comparative Examples 3 and 4 where only the first graphite material or the second graphite core is used alone, the processability is also enhanced.

Table 2 shows the test data of the Raman spectrum median α of the graphite negative electrode material, the coating amount T_{coating amount} of the carbon coating layer in the first graphite material, the mixing ratio β of the first graphite material and the second graphite core, the granulation degree γ of the first powder undergoing bonding between single particles to become secondary particles, the heat treatment temperature T, the median particle diameter D₁50 of the first powder, and the mixing ratio β of the first graphite material and the second graphite core in Examples 1, 2, and 8, where A=α(D₁50×γ+1+T%)+0.1×β×T_{coating amount}. It can be seen from Table 2 that the value of A satisfies 0.01≤A≤5.0. Further, A is greater than or equal to 2 and less than or equal to 5.

**Table 2**

| | **D₁50** | **α** | **γ** | **T** | **T_{coating amount}** | **A** |
|---|---|---|---|---|---|---|
| Example 1 | 9.0 | 0.124 | 100% | 1200 | 2.0 | 2.9 |
| Example 2 | 10.5 | 0.146 | 91% | 900 | 2.0 | 3.1 |
| Example 8 | 10.0 | 0.254 | 134% | 600 | 3.0 | 5.0 |

Finally, it should be understood that the embodiments of the application disclosed herein are illustrations of the principles of the embodiments of this application. Other modified embodiments are also within the scope of this application. Therefore, the embodiments disclosed in this application are merely examples and not limitations. Those skilled in the art can adopt alternative configurations according to the embodiments in this application to implement the application herein. Therefore, the embodiments of this application are not limited to those embodiments that have been precisely described in the application.

## Claims

1. A preparation method of a graphite negative electrode material, comprising: selecting a raw material, performing heat treatment and crushing and shaping treatment on the raw material to form single-particle first powder having a first median particle diameter, wherein 1≤D₁50×(0.71+0.39×D₁50×(1+0.01T))+M_{reversible gram capacity}/372≤100, where T is the temperature of the heat treatment, D₁50 is the first median particle diameter, and M_{reversible gram} capacity is the reversible gram capacity of the formed graphite negative electrode material;
performing secondary treatment on the first powder, such that the single-particle first powder undergoes bonding between single particles to become a secondary particle;
performing graphitization treatment on the first powder to form a single-particle first graphite core, and performing graphitization treatment on the secondary particle to form a second graphite core;
coating a carbon coating layer on the surface of the single-particle first graphite core to form a first graphite material; and
uniformly mixing the first graphite material and the second graphite core in proportion to form the graphite negative electrode material.

2. The preparation method of the graphite negative electrode material according to claim 1, wherein the temperature of the heat treatment is 0~1400°C, the reversible gram capacity of the graphite negative electrode material is 320~365 mAh/g, and the first median particle diameter is 5~20 µm.

3. The preparation method of the graphite negative electrode material according to claim 1, wherein the raw material is needle coke having a volatile matter of 5~7%, or petroleum coke having a volatile matter of 8~11% and an S content of 1.0~3.0%.

4. The preparation method of the graphite negative electrode material according to claim 1, wherein the range of the particle size distribution K value of the first powder is 0.8~1.5, K=(Dv90_{first powder}-Dv10_{first powder})/Dv50_{first powder}, wherein Dv50_{first powder} is the particle size corresponding to when the volume distribution percentage of the first powder reaches 50%, Dv90_{first powder} is the particle size corresponding to when the volume distribution percentage of the first powder reaches 90%, and Dv10_{first powder} is the particle size corresponding to when the volume distribution percentage of the first powder reaches 10%.

5. The preparation method of the graphite negative electrode material according to claim 1, wherein the powder OI value G_{OI} of the graphite negative electrode material and the granulation degree γ of the first powder undergoing bonding between single particles to become secondary particles satisfy the relationship: 1≤100/(γ+3.3×G_{OI})≤25, wherein γ=(D₂50-D₁50)/D₁50×100%, and D₂50 is the second median particle diameter of the secondary particle.

6. The preparation method of the graphite negative electrode material according to claim 5, wherein the powder OI value of the graphite negative electrode material is 1~20, and the granulation degree is 10%~200%.

7. The preparation method of the graphite negative electrode material according to claim 1, wherein coating the carbon coating layer on the surface of the single-particle first graphite core to form the first graphite material comprises: performing a coating step, coating a carbon coating agent on the surface of the single-particle first graphite core; and performing a carbonization step, converting the carbon coating agent into the carbon coating layer.

8. The preparation method of the graphite negative electrode material according to claim 7, wherein the carbon coating agent is petroleum asphalt having a softening point of 140~250°C, a resin having a molecular weight lower than 1000, or coal tar pitch having a softening point lower than 20°C; the coating layer is hard carbon amorphous carbon or soft carbon amorphous carbon, with a thickness of 5~100nm.

9. The preparation method of the graphite negative electrode material according to claim 7, wherein the carbonization step is performed under constant temperature conditions, the carbonization temperature is 800~1500°C, and the constant temperature time is greater than 2h and less than 12h.

10. The preparation method of the graphite negative electrode material according to claim 1, wherein the Raman spectrum median I_{D}/I_{G} of the graphite negative electrode material, the coating amount of the carbon coating layer in the first graphite material, and the mixing ratio of the first graphite material and the second graphite core satisfy the relationship: $0.01 \leq α \left({D}_{1}50\times γ+1+T%\right) + 0.1 \times β \times {T}_{coating amount} \leq 5.0 ,$, wherein, T is the temperature of the heat treatment, β is the mixing ratio of the first graphite material and the second graphite core, T_{coating amount} is the coating amount of the carbon coating layer in the first graphite material, γ is the granulation degree of the first powder undergoing bonding between single particles to become secondary particles, and α is the I_{D}/I_{G} Raman spectrum median of the graphite negative electrode material.

11. The preparation method of the graphite negative electrode material according to claim 10, wherein, in terms of mass ratio, the mixing ratio of the first graphite material and the second graphite core is 3:7~7:3.

12. A graphite battery negative electrode material, comprising a first graphite material and a second graphite core, wherein the first graphite material comprises a first graphite core and a carbon coating layer coated on the surface of the single-particle first graphite core, the second graphite core is formed by performing graphitization treatment on a secondary particle, the first graphite core is obtained by performing graphitization treatment on first powder, and the first powder is formed by performing heat treatment and crushing and shaping treatment on a raw material,
wherein 1≤D₁50×(0.71+0.39×D₁50×(1+0.01T))+Mr_{eversible gram capacity}/372≤100, where T is the temperature of the heat treatment, D₁50 is the first median particle diameter of the first powder, and M_{reversible gram capacity} is the reversible gram capacity of the formed graphite negative electrode material.

13. The graphite negative electrode material according to claim 12, wherein the temperature of the heat treatment is 0~1400°C, the reversible gram capacity of the graphite negative electrode material is 320~365 mAh/g, and the first median particle diameter is 5~20µm.

14. The graphite negative electrode material according to claim 12, wherein the raw material is needle coke having a volatile matter of 5~7%, or petroleum coke having a volatile matter of 8~11% and an S content of 1.0~3.0%.

15. The graphite negative electrode material according to claim 12, wherein the range of the particle size distribution K value of the first powder is 0.8~1.5, K=(Dv90_{first powder}-Dv10_{first powder})/Dv50_{first powder}, wherein Dv50_{first powder} is the particle size corresponding to when the volume distribution percentage of the first powder reaches 50%, Dv90_{first powder} is the particle size corresponding to when the volume distribution percentage of the first powder reaches 90%, and Dv10_{first powder} is the particle size corresponding to when the volume distribution percentage of the first powder reaches 10%.

16. The graphite negative electrode material according to claim 12, wherein the powder OI value G_{OI} of the graphite negative electrode material and the granulation degree γ of the first powder undergoing bonding between single particles to become secondary particles satisfy the relationship: 1≤100/(γ+3.3×G_{OI})≤25, wherein γ=(D₂50-D₁50)/D₁50×100%, and D₂50 is the second median particle diameter of the secondary particle.

17. The graphite negative electrode material according to claim 16, wherein the powder OI value of the graphite negative electrode material is 1~20, and the granulation degree γ is 10%~200%.

18. The graphite negative electrode material according to claim 16, wherein the Raman spectrum median I_{D}/I_{G} of the graphite negative electrode material, the coating amount of the carbon coating layer in the first graphite material, and the mixing ratio of the first graphite material and the second graphite core satisfy the relationship:
$0.01 \leq α \left({D}_{1}50\times γ+1+T%\right) + 0.1 \times β \times {T}_{coating amount} \leq 5.0 ,$ wherein β is the mixing ratio of the first graphite material and the second graphite core, T_{coating amount} is the coating amount of the carbon coating layer in the first graphite material, and α is the I_{D}/I_{G} Raman spectrum median of the graphite negative electrode material.

19. The graphite negative electrode material according to claim 18, wherein the mixing ratio of the first graphite material and the second graphite core is 3:7~7:3.

20. A lithium-ion battery, comprising a negative electrode, the negative electrode being made from any one of the negative electrode materials according to claims 12 to 19.
